# EUROPEAN PATENT SPECIFICATION

(11) **EP 4 019 700 B1**
(45) Date of publication and mention of the grant of the patent: **07.02.2024**
(21) Application number: 21210701.5
(22) Date of filing: 26.11.2021
(51) Int. Cl.: E02B 15/10, E02B 15/04, E01H 12/00

(54) **HIGH VISCOSITY OIL RECOVERY DEVICE FOR SEA SPILL AND METHOD THEREOF**
VORRICHTUNG ZUR RÜCKGEWINNUNG VON HOCHVISKOSEM ÖL BEI MEERESVERSCHMUTZUNG UND VERFAHREN DAFÜR
DISPOSITIF DE RÉCUPÉRATION D'HUILE À HAUTE VISCOSITÉ POUR LES MARÉES NOIRES ET PROCÉDÉ ASSOCIÉ

(30) Priority: 22.12.2020 KR 20200181264
(43) Date of publication of application: 29.06.2022
(73) Proprietor: Korea Institute of Ocean Science and Technology, Yeongdo-gu Busan 49111 (KR)
(72) Inventor: MIN, Cheonhong, Sejong-si (KR); CHOI, Hyuek Jin, Daejeon (KR); CHO, Meang-Ik, Daejeon (KR); OH, Jaewon, Geoje-si (KR); LEE, Seung Guk, Daejeon (KR)
(74) Representative: EP&C

(56) References cited:
- EP-A1- 3 954 474
- WO-A1-90/12156
- WO-A1-2005/100779
- JP-B2- 3 554 814
- US-A- 4 264 444
- US-A- 4 575 426

## Description

### BACKGROUND OF THE INVENTION

### Field of the Invention

The present disclosure relates to a device for recovering high viscosity oil spilled at sea and a method thereof. More particularly, the present disclosure relates to a recovery device for high viscosity oil spilled at sea and a recovery method therefor configured to selectively combine various equipment capable of quickly recovering and removing oil with high pour points, such as low sulfur oil, which spilled at sea or port becomes high viscosity oil or oil which spilled to the sea becomes high viscosity oil due to weathering over time.

### Description of the Related Art

In general, oil spill accidents occurring at the sea damage the marine ecosystem and the natural ecosystem, such as beaches, coasts, or coasts adjacent to the spilling accident.

The spilled oil forms an oil film at sea and pollutes the sea, and after floating for a long time in the sea, is pushed to the shore in a weathered state under the influence of wind or currents and pollutes the entire coast. In particular, at low tide, oil spilled at sea remains on sandy beaches or gravel fields, causing severe environmental and ecosystem damage to a wide range of coasts. Thus, to prevent further environmental pollution, it is important to quickly remove spilled oil from the sea before oil spilled at sea flows into the coast, and it is important that oil that has not yet been recovered from the sea flows into the coast or oil attached to the coast is quickly removed. In addition, it is important to quickly remove a small amount of high viscosity oil leaked during the transfer of fuel oil between ships or work in a port while moving high viscosity oil to a narrow place.

Currently, various methods are used for offshore control of oil spilled at sea, such as an oil recovery device on a control vessel, an oil fence, and an absorbent or landing net.

The existing control method (equipment) described above corresponds to spilled oil that flows out at sea and has fluidity. However, it is difficult to recover oil with a high pour point, such as low sulfur oil, which becomes high viscosity oil or oil with low viscosity or low pour point which has been weathered and hardened over time after oil is leaked at sea, thereby being high viscosity oil.

Conventional low-viscosity spilled oil is recovered with a disk and brush-type recovery device, but it is known that worldwide there is no pump that can be used to recover or transfer solidified low sulfur oil. Some of the low-viscosity oil is absorbed, but the high viscosity oil is difficult to absorb, and landings made with nano material are better to drain than ordinary landings, but once use it, a lot of time to wash and reuse it, is required.

Currently, the recovery of high viscosity oil in the sea or port is carried out using a method such as a person scooping and removing it with a shovel or using a mechanical device such as a forklift. In this method, a worker who removes oil leaked at sea with a shovel is exposed to risks depending on sea conditions such as bad weather. There is a problem that takes a lot of time to recover and has a very limited area for working. Accordingly, a device or method capable of recovering a large amount of high viscosity oil, such as low sulfur oil, in a short time mechanically while rapidly moving that oil in the sea or port is required.

In particular, the International Maritime Organization (IMO) is committed to reducing the sulfur content in marine fuel oil to less than 0.5% to reduce air pollution, which will be applied from January 1, 2020. Low sulfur oil with a sulfur content of 0.5% or less has a high pour point. It thus becomes high viscosity within a short period of time when leaked at sea so that to recover low sulfur oil with existing control equipment and methods for recovering high sulfur oil is very difficult. High sulfur oil does not solidify quickly due to the low pour point and solidifies over time by weathering.

Therefore, low sulfur oil has a higher pour point than other oils. At a temperature below the pour point, low sulfur oil solidifies rapidly, thereby making pumping difficult and clogging filters and pipes. When the seawater temperature is below the pour point of low sulfur oil, low sulfur oil is solidified in an asphaltene state, so applying general control methods and using equipment is impossible. In other words, cooling the oil reduces viscosity and loses fluidity, which is likely to solidify when low sulfur oil leaks into the sea.

In addition, there is a potential risk of accidental contamination accidents due to bursting of transfer hoses due to poor flow of low sulfur fuel at seawater temperatures below the pour point at sea or port when supplying and demanding.

The amount of pollution accident leakage is expected to increase due to the increase in low sulfur oil used. Over the past five years, the total amount of heavy oil offshore leakage was 383.9kℓ (28.5%), and many of the ships using heavy oil are expected to switch to low sulfur oil, and the spill rate is expected to increase accordingly.

Currently, the use of low sulfur oil is in the early stages, and accidents of inadvertently transferring oil are expected to increase. The number of heavy oil accidents in the last five years is 257 (18.8%), and the risk of accidents due to carelessness caused by crew members not recognizing the characteristics of low sulfur oil is increasing.

Currently, while expertise and technical capabilities have been accumulated for high sulfur oil (low viscosity oil) spill accidents, technology that can control high viscosity oil (low sulfur oil, etc.) leaked at sea is insufficient and lacks responsive equipment. Accordingly, the increase in ships using low sulfur oil is a threat to the marine environment, so preparation for this is urgently required.

From EP3954474A1, a prior art document under Art. 54(3) EPC, a multifunctional system for recovering high viscosity oil from a shore is known, which system comprises an oil collection assembly for collecting oil and a transfer assembly configured to transfer oil collected by the oil collection assembly. The oil collection assembly is composed of any of specific skimmers, that are selectively coupled and uses for removal and recovery of oil.

WO2005/100779A1 discloses inter alia a system for eliminating water pollution including oil spills, comprising conveyor belt provided with mobile flow elements, which conveyor belt can be rotatably driven by flowing water.

WO90/12156A1 discloses an oil collecting vessel and a method of removing oil having screwed oil booms for directing oil containing surface water into a receiver.

US4264444A discloses an apparatus for recovering materials floating on water comprising a pair of elongated arms that are articulated on respective sides of a recovery opening mounted on a barge, such that the arms can move in a horizontal direction thereby sweeping floating material into the recovery opening.

US4575426A discloses a method and apparatus for removing oil from a water surface employing a sweeping action of oleophilic bristles comprising at least one brush and a suction means for removing oil from the bristles.

JP3554814B2 discloses a highly viscous oil recovering device comprising a plurality of meshed oil recovering belts having an oil scraping plate.

### Patent Documents

(Patent document 1) Korea Patent No. 10-1732896 (registered on April 27, 2017)

### SUMMARY OF THE INVENTION

Accordingly, the present disclosure has been made keeping in mind the above problems occurring in the related art. The present disclosure is intended to propose a high viscosity oil recovery device for sea spill and a recovery method thereof, in which the oil recovery device is to be mounted on a control vessel at sea or in a port to move freely and to recover and remove high viscosity oil quickly.

The problem to be solved by the present disclosure is to provide a high viscosity oil recovery device for sea spill and a recovery method configured to transfer the high viscosity oil recovered at the site directly to an external oil storage tank or store the recovered oil in the vessel.

In order to solve the problem of the related art as described above, the present disclosure provides a high viscosity oil recovery device for sea spill that removes and recovers high viscosity spill oil such as low sulfur oil or port, including: a device body that recovers high viscosity oil leaked at sea or port; a main body provided in a part of the device body and having an opening part opened toward one side; an oil recovery assembly provided in a part of the device body and for collecting and recovering oil; and a central conveyor (belt) provided in a part of the device body and connected to the oil recovery assembly to transfer oil recovered from the oil recovery assembly as defined in claim 1.

In addition, the device body may be detachably coupled to the front or side of the control vessel.

In addition, the device body may be detachably coupled to a part of the amphibious control vehicle.

In addition, the high viscosity oil recovery device for sea spill may be configured to further include a recovery oil treatment assembly detachably coupled to the control vessel and the amphibious control vehicle, in which the oil recovered from the oil recovery assembly is selectively accommodated or transferred to an external oil storage tank.

The oil recovery assembly is configured to include: a pair of caterpillar conveyors provided with rotating in the direction of the opening part, in which one side is located on opposite sides of the opening part of the main body, the other side is extended in a direction away from each other; and a rotary bucket skimmer provided to be spaced apart from each other at a predetermined interval on the outer surface of the caterpillar conveyor (belt) to collect oil and foreign substances.

The oil recovery assembly includes a pair of scrapper skimmers whose ends are connected to opposite sides of the opening part of the main body.

In addition, the high viscosity oil recovery device for sea spill may be configured to further include: a heat transfer member installed on the part of the control vessel or the amphibious control vehicle to provide a heat source to the recovery oil processing assembly.

A method for recovering sea spill high viscosity oil using the recovery device thereof may be provided, including: a step of installing a recovery device that is detachably coupled to a control vessel or an amphibious control vehicle to recover oil; after the step of installing the recovery device, an oil recovery step of collecting and recovering oil from the sea or port through the oil recovery assembly provided in the recovery device is performed; after the oil recovery step, the recovery oil transfer step of transferring the recovered oil using the central conveyor provided in the recovery device to the control vessel or amphibious control vehicle; after the recovery oil transfer step, a selective separation step of selectively separating water from the oil transferred using the recovery oil treatment assembly mounted on the control vessel or the amphibious control vehicle.

The oil recovery assembly is configured to include: the main body provided in a part of the device body having an opening part opened toward one side; a pair of caterpillar conveyors provided with rotating in the direction of the opening part, in which one side is located on opposite sides of the opening part of the main body, the other side is extended in a direction away from each other; and a rotary bucket skimmer that is provided to be spaced apart from each other at a predetermined interval on an outer surface of the caterpillar conveyor to collect oil and foreign substances.

The oil recovery assembly comprises a pair of scrapper skimmers whose ends are connected to opposite sides of the opening part of the main body.

According to an embodiment of the present disclosure, a high viscosity oil recovery device for sea spill is mounted on a marine control vessel or an amphibious control vehicle that can be moved in shallow waters and on land to remove and recover high viscosity (low sulfur oil, etc.) or low viscosity oil or attached high viscosity oil that flows in around the coastline, or while freely moving through the natural sea area and land.

Therefore, a high viscosity oil recovery device for sea spill has the effect of being capable of removing a large amount of oil in a short time, reducing the time and cost required for control work, and working safely.

Oil can be removed and recovered using a rotary bucket skimmer and scraper skimmer that configures the oil recovery assembly depending on the sea spill, coastal garbage, coastal oil characteristics, and working environment. Therefore, a high viscosity oil recovery device for sea spill has the effect of improving the efficiency of the control operation.

In addition, the oil recovered from the oil recovery assembly is accommodated, and a recovery oil treatment assembly capable of storing the separated oil by separating water from the recovered oil is mounted on a control vessel or an amphibious control vehicle to store the recovered oil in an emergency situation. Large amounts of oil recovered and removed by the oil recovery assembly can be stored in a separate oil storage barge or tank lorry immediately without going through an oil storage tank in the vehicle, which has the effect of treating large amounts of oil quickly.

In addition, the control vessel may be provided a high viscosity oil recovery device, a conveyor transfer equipment, and a heat transfer member used to heat high viscosity oil to have fluidity by using existing ships (heat generated from the ship engine or equipped with a separate heat supply device), and a transfer device and a transfer pipe including a heating device for transferring solidified high viscosity recovery oil to a storage tank in the ship or an external storage tank using a conveyor (belt), etc.

However, the effects obtained in the present disclosure are not limited to the effects mentioned above, and other effects not mentioned will be clearly understood by those skilled in the art from the following description.

### BRIEF DESCRIPTION OF THE DRAWINGS

In the following description, the structural or functional description specified to exemplary embodiments according to the concept of the present disclosure is intended to describe the exemplary embodiments, so it should be understood that the present disclosure may be variously embodied, without being limited to the exemplary embodiments. Hereinafter, exemplary embodiments of the present disclosure will be described in detail with reference to the accompanying drawings.
FIG. 1 is a conceptual view of a device for recovering high viscosity oil spilled at sea according to an embodiment of the present disclosure.
FIG. 2 is a view showing a state in which the recovery device is installed on the side of the control vessel.
FIG. 3 is a perspective view of the rotary bucket skimmer-type oil recovery assembly.
FIG. 4 is a bottom perspective view of the rotary bucket skimmer-type oil recovery assembly.
FIG. 5 is a cross-sectional perspective view of the rotary bucket skimmer-type oil recovery assembly.
FIG. 6 is a view showing a state in which a float is provided in the recovery device.
FIG. 7 is a perspective view of the scraper skimmer type-oil recovery assembly.
FIG. 8 is a bottom perspective view of the scraper skimmer-type oil recovery assembly.
FIG. 9 is a cross-sectional perspective view of the scraper skimmer-type oil recovery assembly.
FIG. 10 is a flowchart illustrating a method for recovering high viscosity oil spilled at sea according to an embodiment of the present disclosure.

### DESCRIPTION OF THE PREFERRED EMBODIMENT

Hereinbelow, embodiments of this disclosure will be described in detail with reference to the accompanying drawings so that those of ordinary skilled in the art may easily implement this disclosure. However, since the description of the present disclosure is only an embodiment for structural or functional description, the scope of the present disclosure should not be understood as being limited by the embodiments described in the document. That is, since the embodiment may have various changes and may have various forms, it should be understood that the scope of the present disclosure includes equivalents capable of realizing the technical idea. In addition, since the objective or effect presented in the present disclosure does not mean that a specific embodiment should include all of them or only such effects, it should not be understood that the scope of the present disclosure is limited thereby.

The meaning of the terms described in the present disclosure should be understood as follows.

Terms such as "first" and "second" distinguish one component from another, and these terms should not limit the scope of rights. For example, a first component may be termed a second component, and similarly, a second component may also be termed a first component. When a component is mentioned as "connected" to another component, it should be understood that another component may be directly connected to the other component, but another component may exist in the middle. On the other hand, when it is mentioned that a certain element is "directly connected" to another element, it should be understood that the other element does not exist in the middle. On the other hand, other expressions describing the relationship between elements, that is, "between" and "in-between" or "neighboring to" and "directly adjacent to", etc., should be interpreted similarly.

The singular expression should be understood as including the plural expression unless the context clearly dictates otherwise, and terms such as "comprises" or "have" is intended to designate that there are features, numbers, steps, operations, components, parts, or a combination thereof, and does not preclude the presence or addition of one or more other features or numbers, steps, operations, components, or a combination thereof.

All terms used herein have the same meaning as commonly understood by those of ordinary skilled in the art to which this disclosure belongs unless otherwise defined. Terms defined in generally used in the dictionary should be interpreted as having the meaning consistent with the context of the related art and cannot be interpreted as having an ideal or excessively formal meaning unless explicitly defined in the present disclosure.

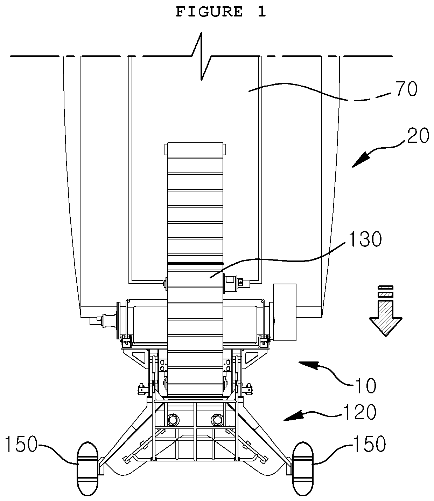

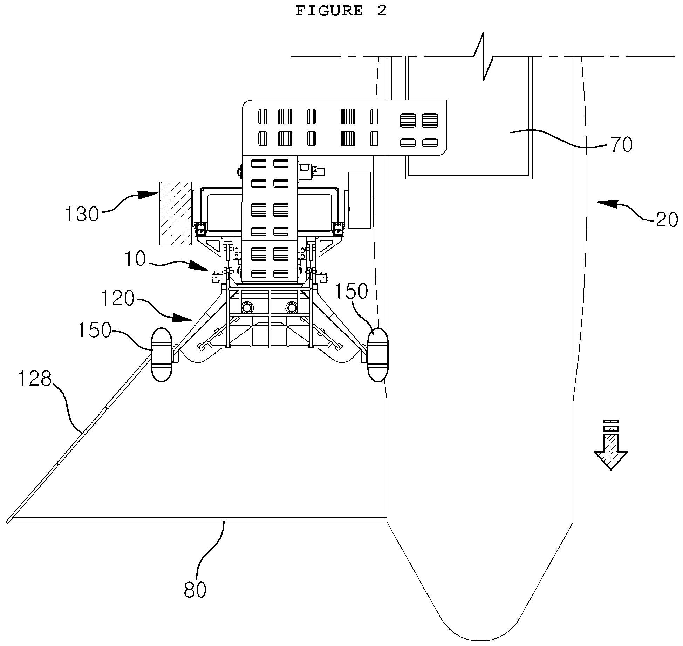

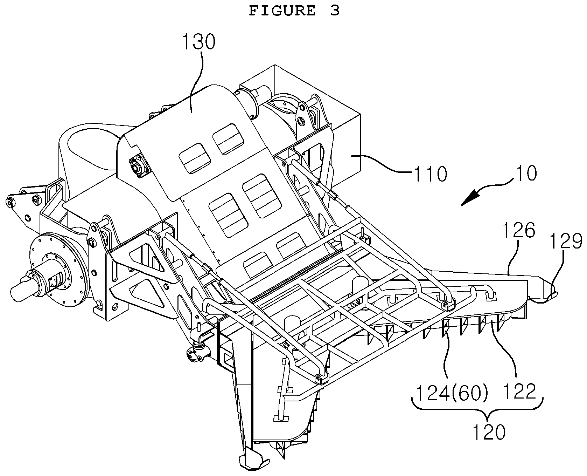

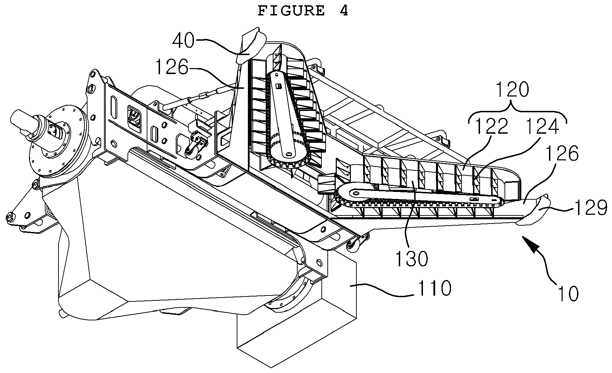

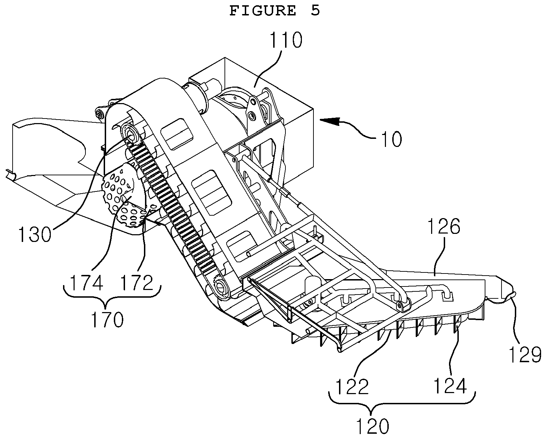

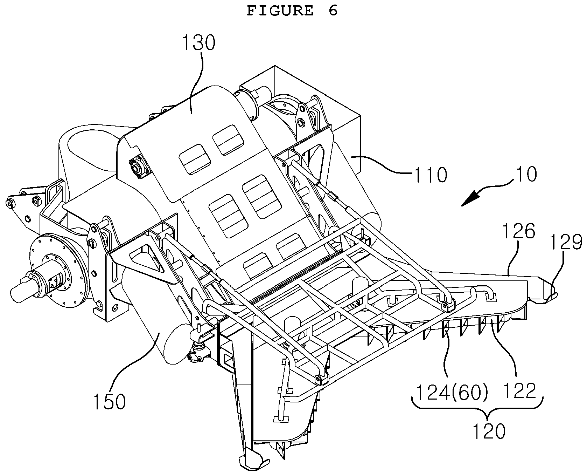

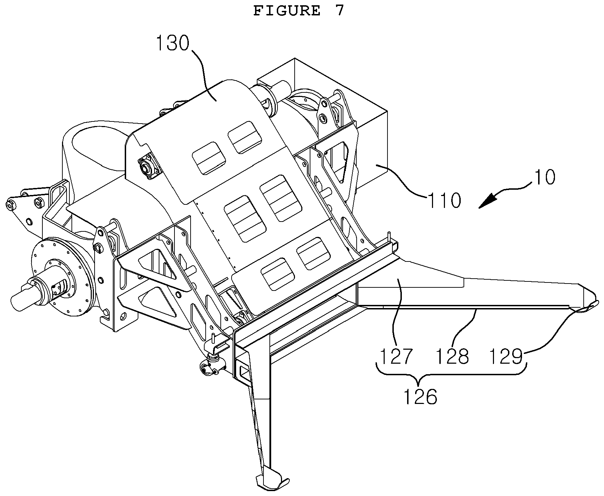

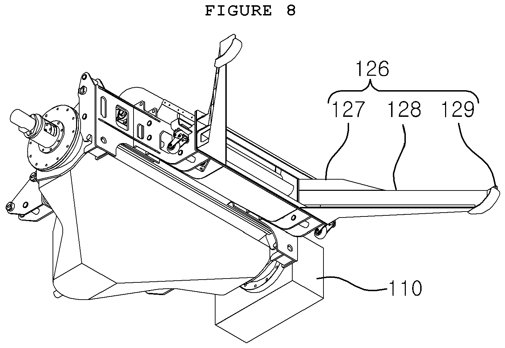

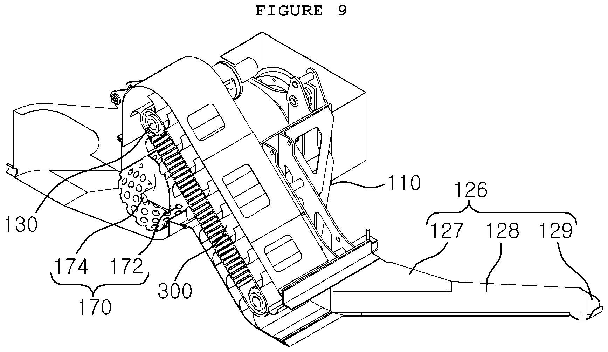

FIG. 1 is a conceptual view of a device for recovering high viscosity oil spilled at sea according to an embodiment of the present disclosure. FIG. 2 is a view showing a state in which the recovery device is installed on the side of the control vessel. FIG. 3 is a perspective view of the rotary bucket skimmer-type oil recovery assembly. FIG. 4 is a bottom perspective view of the rotary bucket skimmer-type oil recovery assembly. FIG. 5 is a cross-sectional perspective view of the rotary bucket skimmer-type oil recovery assembly. FIG. 6 is a perspective view of the scraper skimmer-type oil recovery assembly. FIG. 7 is a bottom perspective view of the scraper skimmer-type oil recovery assembly. FIG. 8 is a cross-sectional perspective view of the scraper skimmer-type oil recovery assembly. And FIG. 9 is a view showing a state in which a float is provided in the recovery device.

As shown in FIGS. 1 to 9, the present disclosure may be configured to provide a high viscosity oil recovery device for sea spill that removes and recovers high viscosity spill oil such as low sulfur oil spilled at sea or port, including a device body 10, a main body 110, an oil recovery assembly 120, and a central conveyor 130.

The device body 10 can recover the high viscosity oil spilled at sea or port. The device body 10 is movably connected to the control vessel 20 or an amphibious control vehicle (not shown) by a connection arm (not shown). The connection arm may be provided in a direction parallel to each other in front of the control vessel 20 or the amphibious control vehicle (not shown). One side of the connection arm is hinged to the front or side surface of the control vessel 20 or the amphibious control vehicle (not shown), and the other side is connected to the device body 10. Accordingly, the vertical position of the device body 10 may be changed according to the operation of the connection arm.

The connection arm is composed of a plurality of rods configured to be foldable, and a hydraulic cylinder for moving the rods in a direction toward or away from each other may be provided between the rods. Accordingly, the length of the connection arm can be varied by the operation of the hydraulic cylinder.

In this embodiment, the height of the device body 10 may also be adjusted according to the variable length of the connection arm. Therefore, when the thickness of the oil film is thick, the length of the connection arm may be changed so that the oil recovery assembly 120 moves downward. In this way, more oil can be captured by the oil recovery assembly 120.

In this embodiment, the device body 10 may be selectively connected to the other side of the connection arm. To this end, a gripper substantially having a tongs shape may be provided on the other side of the connection arm. The gripper serves to pick up the outer surface of the device body 10 and opposite outer surfaces of the main body 110 and couple them to the connection arms in the present embodiment. In this way, the device body 10 may be detachably coupled to the other side of the connection arm.

In this embodiment, a detection sensor (not shown) may be provided inside the gripper. The detection sensor serves to detect which skimmer among the skimmers coupled to the gripper. In this embodiment, the detection sensor may detect one of the first tags of the rotary bucket skimmer 124 and the second tag of the scraper skimmer 126 and transmit the sensed value to a controller or the like.

In addition, the rotary bucket skimmer 124 method can be used in parallel with the existing skimmer that recovers low-viscosity oil using a control vessel or an amphibious control vehicle. That is, when the low viscosity oil is recovered, the existing skimmer is used. When the high viscosity oil is recovered, the existing skimmer can be replaced with the rotary bucket skimmer by the present disclosure method.

In the present embodiment, the connection arm is provided with a gripper to connect to the device body 10 selectively but is not limited thereto. For example, the connection arm may be provided with an electromagnet, and the device body 10 may be provided with a magnetic material to be selectively connected to each other.

The main body 110 is provided in a part of the device body 10, and an opening part opened toward one side may be formed.

The oil recovery assembly 120 is provided in a part of the device body 10 and may collect and recover oil.

The oil recovery assembly 120 includes a caterpillar conveyor 122 and a rotary bucket skimmer 124.

The caterpillar conveyor 122 forms a pair, and one side is respectively located on opposite sides of the opening of the main body 110, the other side extends in a direction away from each other and can rotate in the direction of the opening part.

The rotary bucket skimmer 124 is provided to be spaced apart at a predetermined interval on the outer surface of the caterpillar conveyor 122 to collect oil and foreign substances.

The rotary bucket skimmer 124 can easily collect a large amount of high viscosity floating oil using rotational force. In this embodiment, the rotary bucket skimmer 124 may be composed of a plurality of buckets 60.

In this embodiment, the rotary bucket skimmer 124 may be provided with a tag (not shown). The tag stores information about the rotary bucket skimmer 124. In this embodiment, the tag is RFID but not necessarily limited thereto.

An opening part is formed in the rotary bucket skimmer 124. The opening part is formed to open toward the front. The opening part connects through with the transfer space of the central conveyor 130.

One side of the caterpillar conveyor (belt) 122 is located in the opening part, and the other side is provided, extending in a direction away from each other. The caterpillar conveyor (belt) 122 is arranged such that the width therebetween becomes narrower toward the opening part. A plurality of buckets 60 is provided on the caterpillar conveyor (belt) 122 outer surface.

In this embodiment, one end of the bucket 60 is connected to the outer surface of the caterpillar conveyor (belt) 122, and the other end may be extended in bending toward the opening part. That is to allow the oil to move toward the opening part easily. The bucket 60 may be made of an aluminum alloy steel or polypropylene (PP) material resistant to corrosion and deformation. In addition, the bucket 60 may be detachably coupled to the caterpillar conveyor (belt) 122. When the bucket 60 is injured or damaged, only the damaged bucket 60 can be replaced.

The rotary bucket skimmer 124 may be provided with a spray nozzle. The spray nozzle receives water supplied from the recovery oil treatment assembly and serves to spray water. In this case, the spray nozzle may induce the oil to move in the inlet direction. Accordingly, it is possible to increase the oil collection efficiency further.

The spray nozzle may receive seawater from a seawater supply pipe provided in the rotary bucket skimmer 124. In this embodiment, one end of the seawater supply pipe may be connected to the spray nozzle. The other end may be connected to an oil-water separator (not shown) of the recovery oil treatment assembly.

The oil recovery assembly 120 comprises a pair of scraper skimmers 126, each having one end connected to opposite sides of the opening part of the main body 110. The scraper skimmer 126 serves to collect oil or high viscosity oil floating on the sea level or a sandy beach at the shore in the direction of the central conveyor 130.

The opening part is formed to open toward the front of the control vessel 20 or the amphibious control vehicle. The opening part and the transfer space of the central conveyor 130 connect through with each other so that the oil introduced through the opening part can be transferred to the transfer space.

One end of the pair of supports 127 is connected to opposite sides of the opening part, respectively. The support 127 is formed to extend long toward the front of the control vessel 20 or the amphibious control vehicle. The support 127 serves to support the sweeping arm 128 to be described below.

One end of the sweeping arm is connected to the other end of the support 127. One end of the sweeping arm 128 is hinged to the other end of the support 127, and the other end may be formed to be stretchable toward the front or side of the control vessel 20 or the amphibious control vehicle. A stopper 129 is formed at the other end of the sweeping arm 128.

The stopper 129 may be formed to protrude from the other ends of the sweeping arms 128 in opposite directions, respectively. The stopper 129 may be coupled to the other end of the sweeping arm 128 in an angle-adjustable manner. The stopper 129 prevents oil from escaping in a direction perpendicular to the longitudinal direction of the sweeping arm 128.

A seawater supply pipe may be mounted inside the sweeping arm 128 in the longitudinal direction of the sweeping arm 128. The seawater supply pipe serves to receive water supplied from the recovery oil treatment assembly and deliver water to the sweeping arm 128.

The sweeping arm 128 may be provided with a spray nozzle. A plurality of spray nozzles is configured and mounted to be spaced apart at regular intervals on the sweeping arm 128. The spray nozzle is connected to the seawater supply pipe and serves to spray water from the recovery oil treatment assembly to the outside. With this configuration, the oil may be induced to be collected inside the sweeping arm 128 by the water sprayed through the spray nozzle.

That is, the recovery rate of oil can be increased by increasing the density of oil dispersed at the sea level by the sweeping arm 128 and the injection nozzle. In particular, the oil recovery rate can be increased by moving the sweeping arm 128 to collect oil in the width direction and preventing the oil from moving to the lower part of the sweeping arm 128 by the water sprayed through the spray nozzle. The spray nozzles may be respectively mounted so that the angle can be adjusted. For example, the spray nozzle may be formed in a multi-joint tube shape.

An interlocking member is provided between the sweeping arm 128 and the main body 110. The interlocking member has a multi-stage shape having a telescopic structure and serves to move the sweeping arm 128 in a direction closer to or away from the main body 110.

In addition, the sweeping arm 128 is manufactured in a multi-stage telescopic method and can be adjusted to a predetermined length. Therefore, the recovery device of the present disclosure further includes the sweeping arm support 80 coupled to the end of the sweeping arm 128 extended to the predetermined length and connected to the control vessel 20 to support the sweeping arm 128 stretched in length.

The central conveyor 130 is provided in a part of the device body 10 and is connected to the oil recovery assembly 120 to transfer the oil recovered from the oil recovery assembly 120.

The central conveyor 130 serves to transfer solidified oil, marine waste, and other foreign substances transferred from the oil recovery assembly 120 to the oil storage tank of the oil treatment assembly of the control vessel 20 or the amphibious control vehicle. The central conveyor 130 may be configured as a belt part.

One side of the belt part is connected to the main body 110, and the other side is connected to the recovery oil processing assembly of the control vessel 20 or the amphibious control vehicle. The central conveyor 130 serves to transfer oil received from the oil recovery assembly 120 to the recovery oil treatment assembly while circulating between the device body 10 and the recovery oil treatment assembly.

In this embodiment, the belt part is configured to rotate together, surrounding a front roller (not shown) rotatably located on the device body 10 and a rear roller (not shown) located on the amphibious control vehicle 20. In the present embodiment, the belt part may be made of a nonwoven fabric having a porosity using a lipophilic fiber, that is, a synthetic fiber such as polyester or polypropylene, or a natural material such as sawdust, wool, or bark.

The device body 10 may be detachably coupled to the front or side of the control vessel 20. Specifically, the device body 10 is attached to the bow of the control vessel 20 and can directly transfer the recovered oil through the central conveyor 130 to the control vessel 20. Also, the device body 10 is mounted on the side of the control vessel 20 and the oil recovered through the central conveyor 130 can be transferred to the control vessel 20 through the recovery conveyor mounted in the control vessel 20.

The device body 10 may be detachably coupled to a part of an amphibious control vehicle (not shown).

In this embodiment, the amphibious control vehicle may move at sea (less than 1m in depth in the present embodiment) and on land. When moved from the sea, the amphibious control vehicle is moved by a thrust of a propeller (not shown) and is moved by a driving force of an infinite orbit wheel on land.

The amphibious control vehicle can be moved even on soft terrain, for example, tidal flats or beaches, by the caterpillar wheels. In addition, oil can be easily removed and recovered using the amphibious control vehicle even at a low draft level with a draft depth of about 50 cm.

According to an embodiment of the present disclosure, the high viscosity oil recovery device for sea spill further includes a recovery oil treatment assembly (not shown), a float 150, and a heat transfer member.

The recovery oil treatment assembly (not shown) is detachably coupled to the control vessel 20 and the amphibious control vehicle. The oil recovered from the oil recovery assembly 120 can be selectively accommodated or transferred to an external oil storage tank.

The recovery oil treatment assembly (not shown) may include a first oil storage tank (not shown), a second oil storage tank (not shown), an oil-water separator (not shown), and an oil recovery line (not shown).

The first oil storage tank may receive oil transferred from the central conveyor 130 or a transfer pump assembly (not shown) to be described later.

The first oil storage tank is loaded on the control vessel 20 or the amphibious control vehicle. An upper inlet may be formed at the upper part of the first oil storage tank. The upper inlet serves as an inlet through which the oil delivered from the central conveyor 130 is introduced.

A mesh screen box may be detachably provided on the inner upper side of the first oil storage tank facing the upper inlet. The mesh screen box is manufactured in the net-shaped box and serves to primarily filter bulky tar lumps and other foreign substances among the oil transferred from the central conveyor 130.

In this embodiment, since the mesh screen box is provided detachably, when the mesh screen box is full of tar lumps, other foreign substances, etc., the mesh screen box is moved to the outside using a separate crane, etc. to empty the contents. An empty mesh screen box may be mounted on the inner upper side of the first oil storage tank. To this end, a guide rib (not shown) is provided to protrude from the outer lower end of the mesh screen box, and a support rib (not shown) on which the guide rib is hung and supported may be formed inside the first oil storage tank.

An outlet may be formed at the other side of the first oil storage tank. Oil and foreign substances stored in the first oil storage tank are discharged to the outside through the outlet. The outlet may be selectively connected to an external exhaust pipe or an external exhaust hose of a particular loading vehicle.

The second oil storage tank may receive oil and water recovered from the central conveyor 130. The second oil storage tank is a part in which the recovered oil and water are accommodated. The second oil storage tank is a part in which the suctioned seawater is accommodated when the floating oil and the floating oil are sucked, and oil that has a lower viscosity than the oil stored in the first oil storage tank can be stored.

An oil-water separator is connected to the second oil storage tank, separates water from the recovered oil, and discharges the separated water to the outside. The separated oil can be supplied to the first oil storage tank. In this embodiment, the oil-water separator can separate oil using centrifugation.

The oil recovery line is connected between the oil-water separator and the lower part of the second oil storage tank. The oil recovery line can transfer the oil separated from the oil-water separator to the second oil storage tank. The oil-water separator and the lower part of the first oil storage tank may be connected by the oil recovery line. The oil recovery line serves to transfer the oil separated from the oil-water separator to the first oil storage tank through the oil recovery line.

In this embodiment, the recovery oil treatment assembly may further include a supply pump (not shown) and a floating oil transfer line (not shown) in addition to the first oil storage tank, the second oil storage tank, the oil-water separator, and the oil recovery line.

In this embodiment, the second oil storage tank and the oil-water separator may be connected to each other by a supply line provided in the supply pump. That is, the oil and water mixture is moved through the supply line from the second oil storage tank to the oil-water separator by the driving of the supply pump.

The oil-water separator may be connected to a seawater supply pipe. The water separated from the oil-water separator is moved to the seawater supply pipe.

Meanwhile, although not shown, a sensing part may be provided on the upper inner walls of the first oil storage tank and the second oil storage tank. The sensing part is to detect the oil level accommodated in the first oil storage tank, and the second oil storage tank and the water level accommodated together with the oil.

The water level value sensed by the sensing part may be transmitted to a controller or the like. In this case, the controller may compare the predetermined value with the water level value transmitted from the sensing part and stop the operation of the oil recovery assembly 120 when the predetermined value is greater than or equal to the predetermined value.

A floating oil transfer line (not shown) is provided between the upper parts of the first oil storage tank and the second oil storage tank. The floating oil transfer line connects between the upper parts of the first oil storage tank and the second oil storage tank and serves as a passage for guiding the oil floating in the upper part of the second oil storage tank to move to the first oil storage tank.

The float 150 may be provided on the part of the device body 10 to provide buoyancy for floating the device body 10 in the sea or in a port.

The heat transfer member may be mounted on the part of the control vessel 20 or the amphibious control vehicle to provide a heat source to the recovery oil treatment assembly.

The heat transfer member may be mounted on the part of the recovery oil treatment assembly to provide a heat source to the recovery oil treatment assembly. Specifically, the heat transfer member may be mounted on a part adjacent to the first oil storage tank to provide a heat source to the first oil storage tank to improve the fluidity of the oil.

The heat transfer member may receive heat from the engine of the control vessel 20 or the amphibious control vehicle and transfer heat to the recovery oil treatment assembly. Specifically, the heat transfer member may receive heat from the engine of the control vessel 20 or the amphibious control vehicle and transfer heat to the first oil storage tank. That is, the high viscosity oil (low sulfur oil) recovered in the first oil storage tank is heated by the exhaust heat of the vessel engine, and the oil with improved fluidity due to lowered dynamic viscosity is transferred to an external tank or ship using a transfer pump, or using the central conveyor 130. Therefore, the oil can be immediately loaded onto a tanker supported outside and transferred to land.

The heat transfer member may be a heat pipe, a heat exchanger that efficiently transfers heat between two solid interfaces by merging the principles of thermal conductivity and phase transition.

The heat pipe is a device that embeds a highly vaporizable working fluid in a cylindrical or polygonal sealed pipe and vaporizes the working fluid having a low vaporization point as soon as it is heated, thereby quickly heating one end to the end of the heated pipe at a very high speed. By transferring heat using latent heat, huge heat transfer performance is achieved compared to conventional heat transfer devices using a single-phase working fluid. The basic structure of a heat pipe consists of a sealed container, a working fluid and a capillary tube (wick) inside the pipe. The heat pipe is variously classified according to the material and working fluid of the outer wall, the type of capillary structure, the return method of liquid, the internal geometry, and the operating temperature.

In addition, the present disclosure may further include a high viscosity oil separation unit 170 provided in the main body 110. The high viscosity oil separation unit 170 may include a separation chamber 172 and a transfer screw 174.

The separation chamber 172 may be made of steel or the like and may have a cylindrical structure in which a plurality of holes is formed. The transfer screw 174 may be inserted and coupled into the separation chamber 172 to transfer the oil recovered and separated through a driving member receiving control such as a controller in a predetermined direction. The high viscosity oil separation unit 170 is detachable and can separate the high viscosity oil recovered from the control vessel 20. The high viscosity oil separation unit 170 does not need to be mounted separately in amphibious control vehicles that are difficult to collect high viscosity oil.

The present disclosure may further include a transfer pump assembly (not shown) . The transfer pump assembly may be provided in the control vessel 20 or the amphibious control vehicle and may be connected to the central conveyor 130 to deliver oil to the recovery oil treatment assembly or transfer oil to the outside.

The transfer pump assembly serves to deliver oil to the recovery oil treatment assembly or to transfer oil to the outside.

The transfer pump assembly 400 is provided with a transfer pump. The transfer pump is located inside a tray (not shown) or the like. The transfer pump serves to transfer the oil and water dropped from the lower part of the partition plate (not shown) to the recovery oil treatment assembly or the outside, for example, an external discharge hose. At this time, the oil dropped from the lower part of the partition plate is relatively low viscosity oil, and the water is seawater.

The transfer pump assembly may include a first transfer line and a second transfer line in this embodiment. That is to allow the characteristics of the oil to be removed and recovered through the transfer pump or to be transferred directly to the outside without going through the recovery oil treatment assembly in the case of a large amount.

One end of the first transfer line may be connected to the transfer pump, and the other end may be selectively connected to the first oil storage tank or an external discharge hose delivered from the outside. Here, the external discharge hose is connected to the oil recovery tank 70 and the like but is not necessarily limited thereto. For example, the external discharge hose may be a hose connected to a separate loading vehicle.

To this end, a valve may be provided at the other end of the first transfer line. The valve may be selectively connected to the first oil storage tank or the external discharge hose in a state connected to the first transfer line. That is, the oil passing through the first transfer line may be discharged to the outside through the external discharge hose or moved to the first oil storage tank under the control of the valve.

One end of the second transfer line may be connected to the transfer pump, and the other end may be connected to the second oil storage tank. That is, the second transfer line serves as a passage for guiding oil and water to be moved to the second oil storage tank. In this embodiment, a control valve is connected to one end of the second transfer line, and the second transfer line may be opened or closed according to the type of oil removed and recovered, for example, high viscosity oil or low viscosity oil.

A recovery part may be provided at the rear of the control vessel 20 or the amphibious control vehicle. The recovery part is a part in which the garbage received from the central conveyor 130 falls and is recovered. In this embodiment, the recovery part is provided integrally with the control vessel 20 or the amphibious control vehicle but is not necessarily limited thereto. For example, the recovery part may be detachably mounted on the control vessel 20 or the amphibious control vehicle. That is to allow the recovery part to be replaced with another when the recovered garbage or the like is filled.

A scratcher (not shown) may be provided at the entrance of the recovery part facing the central conveyor 130. The scratcher is for separating garbage, etc., stuck in the rake. The scratcher may be formed in a substantially sawtooth shape.

A flat plate may be provided at the rear bottom of the control vessel 20 or the amphibious control vehicle. The flat plate has a substantially rectangular flat plate shape and serves to flatten the sandy beach after the coastal garbage collection equipment has passed.

According to this embodiment configured as described above, a high viscosity oil recovery device for sea spill is mounted on the control vessel 20 operated in the sea or coast or the amphibious control vehicle that can move in shallow waters and on land, in the sea, in ports, around the coastline, or in shallow waters and on land. A high viscosity oil recovery device for sea spill is possible to remove and recover the high viscosity or low viscosity oil or the attached high viscosity oil floating in the ocean while moving freely. Therefore, a large amount of oil can be removed in a short time, the time and cost required for control work can be reduced, and work can do safely.

In addition, oil can be removed and recovered using the rotary bucket skimmer 124, the scraper skimmer 126, etc. can be replaced or used together with the existing skimmer depending on the sea spill, coastal garbage, and coastal oil characteristics and working environment. Therefore, the control operation can be performed efficiently.

In addition, the oil recovered from the oil recovery assembly 120 is accommodated, and the recovery oil treatment assembly (not shown) capable of storing the separated oil by separating water from the recovered oil is mounted on a control vessel or an amphibious control vehicle to store the recovered oil in an emergency. Large amounts of oil recovered and removed by the oil recovery assembly 120 can be stored in a separate oil transfer barge or loading vehicle, for example, an oil recovery tank, without passing through an oil storage tank in a control vessel or a control vehicle, so a large amount of oil can be treated quickly.

In addition, water separated through the oil separator may be supplied to an oil collection spray nozzle provided on the scraper skimmer 126 or an oil collection spray nozzle that may be separately provided on the rotary bucket skimmer 124. Therefore, since a seawater pump or the like is not additionally installed to supply oil collection water to the scraper skimmer 126 or the rotary bucket skimmer 124, the number of components may be reduced, and cost and time may be reduced.

On the other hand, the present disclosure may be provided with a recovery oil storage tank 70. In this embodiment, the recovery oil storage tank 70 is provided on the deck of the control vessel 20 or the amphibious control vehicle but is not necessarily limited thereto. For example, the recovery oil storage tank may be a separate tank 70 towed to the control vessel 20 or an amphibious control vehicle. In addition, the recovery oil storage tank 70 may be manufactured in an open type with or without a cover. The recovery oil storage tank 70 mounted in the amphibious control vehicle may be connected by an external discharge hose and the like to store oil delivered from the first oil storage tank and the second oil storage tank. When the recovery oil storage tank 70 towed by the amphibious control vehicle is full of oil, etc., by separating only the trailer and quickly replacing only the oil recovery tank, a large amount of oil can be processed in a short time.

That is, the control vessel 20 may tow a barge for oil storage and transfer, and the amphibious control vehicle may tow an additional oil recovery tank such as a tank lorry. The amphibious control vehicle may be provided with first and second oil storage tanks and an oil-water separator so that after separating oil and water, the oil is transferred to the recovery oil storage tank 70, and the separated water is transferred to the high-pressure injection nozzle. The control vessel 20 has a single recovery oil storage tank 70, and, fluid oil heated by the heat transfer member may be transferred to a barge wire towed by an oil transfer pump. Solidified oil or garbage can be collected by a mesh screen basket or the like and transferred to the outside of the control vessel 20 by a crane or the like. In addition, when there is no recovery oil storage tank 70 by using the primary control vessel 20, recovered oil may be transferred to a barge equipped with an oil storage tank.

On the other hand, the present disclosure may be provided with a crane. The crane is mounted on one side of the upper part of the control vessel 20 or the amphibious control vehicle. The crane may have different positions depending on the arrangement of the recovery oil treatment assembly. The mounting position of the crane may vary depending on the position of the load, such as the first oil storage tank, the second oil storage tank, and the like. The crane may be operated by receiving power from the power transmission unit.

A hanging member may be provided at one end of the crane. The hanging member includes various work tools and equipment, for example, an oil skimmer that sucks and recovers oil spilled at sea, a separate vacuum suction member, or a portable nozzle and a bucket that can contain a lump of oil spilled, solidified oil, etc. may be selectively hung and coupled as needed. In this embodiment, the mesh screen box may be moved to the outside by hanging one side of the mesh screen box on the hanging member. In this way, workability can be improved by exchanging work tools and equipment for various types of oil recovery while providing work support to the crane's hanging members according to the field conditions.

On the other hand, the present disclosure may be provided with a power transmission unit. The power transmission unit may be mounted in the control vessel 20 or the amphibious control vehicle. The power transmission unit serves to supply power to the oil recovery assembly 120, the recovery oil treatment assembly, the central conveyor 130, and the transfer pump assembly.

In this embodiment, the power transmission unit may be connected to the controller. The controller serves to control the operations of the oil recovery assembly 120, the recovery oil treatment assembly, the central conveyor 130, and the transfer pump assembly. The controller also serves to control the operation of the connection arm and gripper. In this embodiment, the controller may be provided in the driver's seat of the amphibious control vehicle or the control vessel 20.

In the rear of the amphibious control vehicle of the present disclosure, the coastal garbage recovery equipment may be detachably coupled. The coastal garbage collection equipment can be used to remove and recover garbage flowing from the sea to the shore together with other equipment and can be used alone to maintain and clean the beach sand
On the beach sand, large and small garbage is generated due to a large number of users during summer vacation. In addition, household waste washed into the sea during natural disasters such as floods and typhoons is often pushed back to the beach and buried in the sand. Therefore, by using only the coastal garbage recovery equipment, the beach sand can also be easily cleaned.

In this embodiment, the coastal garbage recovery equipment may collect the coastal and beach garbage while the central conveyor 130 to which a plurality of rakes is attached rotates.

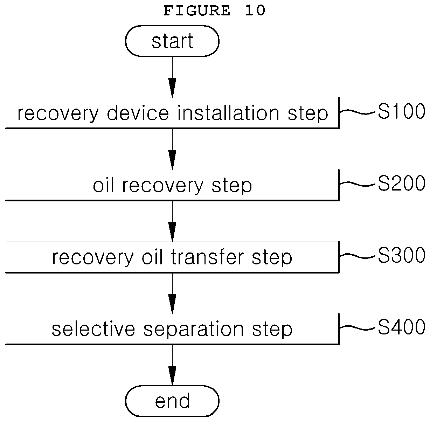

FIG. 10 is a flowchart illustrating a method for recovering high viscosity oil spilled at sea according to an embodiment of the present disclosure.

As shown in FIG. 10, in the method for recovering sea spill high viscosity oil using the above-described high viscosity oil recovery device for sea spill, the present disclosure may be provided including a recovery device installation step S100, an oil recovery step S200, a recovery oil transfer step S300, and an selective separation step S400.

The recovery device installation step S100 is installing a recovery device that is detachably coupled to the control vessel 20 or an amphibious control vehicle to recover oil.

The oil recovery step S200 is collecting and recovering oil from the sea or port with the oil recovery assembly 120 provided in the recovery device after the recovery device installation step S100.

The recovery oil transfer step S300 is transferring the recovered oil to the control vessel 20 or an amphibious control vehicle using the central conveyor 130 provided in the recovery device after the oil recovery step S200.

The selective separation step S400 is selectively separating water from the transferred oil using the recovery oil treatment assembly mounted on the control vessel 20 or the amphibious control vehicle after going through the recovery oil transfer step S300.

The oil recovery assembly 120 may include a main body 110, a caterpillar conveyor 122, and a rotary bucket skimmer 124.

The main body 110 is provided in a part of the device body 10, and an opening part opened toward one side may be formed.

The caterpillar conveyor 122 forms a pair, and one side is respectively located on opposite sides of the opening part of the main body 110, the other side extends in a direction away from each other and can rotate in the direction of the opening part.

The rotary bucket skimmer 124 is provided to be spaced apart at a predetermined interval on the outer surface of the caterpillar conveyor 122 to collect oil and foreign substances.

The oil recovery assembly 120 may be a pair of scraper skimmers 126 whose one ends are respectively connected to opposite sides of the opening part of the main body 110.

The rotary bucket skimmer 124 and the scraper skimmer 126 may be used separately or mounted together.

The method for recovering sea spill high viscosity oil according to an embodiment of the present disclosure may further include a transfer pump assembly connected to the central conveyor 130 to transfer oil to the recovery oil treatment assembly or to transfer oil to the outside.

Hereinbelow, detailed descriptions of the components are as described above in the disclosure of the recovery device, and other components mentioned in the disclosure of the recovery device but not mentioned in the disclosure of the recovery method may be applied.

The detailed description of the preferred embodiments of the present disclosure described above is provided to enable those skilled in the art to make and practice the present disclosure. Although exemplary embodiments of the present disclosure have been described with reference to preferred embodiments, those skilled in the art will appreciate that various modifications, additions and substitutions are possible, without departing from the scope of the present invention as defined by the appended claims.

## Claims

1. A high viscosity oil recovery device for sea spill for removing and recovering high viscosity oil spilled at sea or port, wherein the device comprises:
a device body (10) configured to recover high viscosity oil spilled at sea or port;
a main body (110) provided in a part of the device body and having an opening part opened toward one side;
an oil recovery assembly (120) provided in a part of the device body and configured to collect and recover oil; and
a central conveyor (130) provided in a part of the device body and connected to the oil recovery assembly to transfer oil recovered from the oil recovery assembly;
wherein the oil recovery assembly (120) comprises:
a pair of caterpillar conveyors (122) having one sides located on opposite sides of an opening part of the main body, respectively, and the other sides extending in directions away from each other, the caterpillar conveyors (122) being configured to rotate in a direction of the opening part;
rotary bucket skimmers (124) provided to be spaced apart from each other at a predetermined interval on outer surfaces of the caterpillar conveyors to collect oil and foreign substances; **characterized in that** the oil recovery assembly (120) furthermore comprises:
a pair of scraper skimmers (126), each having one end connected to opposite sides of the opening part of the main body; each scraper skimmer comprising:
a support (127) which is formed to extend long toward the front of a control vessel or an amphibious control vehicle;
a sweeping arm (128) having one of its ends hinged to the other end of the respective support and wherein the other of its ends is configured to be stretchable toward the front or side of the control vessel or the amphibious control vehicle;
a stopper (129) formed to protrude from the other end of the respective sweeping arm in opposite directions respectively and coupled to the other end of the respective sweeping arm in an angle-adjustable manner; and
an interlocking member provided between the respective sweeping arm and the main body and having multi-stage shape having a telescopic structure;
wherein each sweeping arm (128) is manufactured in a multi-stage telescopic method and can be adjusted to a predetermined length,
wherein the oil recovery assembly (120) further comprises:
a sweeping arm support (80) coupled to the end of one of the sweeping arms extended to the predetermined length and suitable to be connected to the control vessel to support the sweeping arm stretched in length.

2. The device of claim 1, **characterized in that** the device body (100) is detachably coupled to a front or side of a control vessel (20).

3. The device of claim 2, **characterized in that** the device body (100) is detachably coupled to a part of an amphibious control vehicle.

4. The device of claim 3, **characterized in that** the device further comprises:
a recovery oil treatment assembly detachably coupled to each of the control vessel and the amphibious control vehicle, wherein oil recovered from the oil recovery assembly is selectively accommodated therein or transferred to an external oil storage tank.

5. The device of claim 4, **characterized in that** the device further comprises:
a heat transfer member (16) mounted on a part of the control vessel or the amphibious control vehicle to provide a heat source to the recovery oil treatment assembly.

6. A method for recovering sea spill high viscosity oil using the high viscosity oil recovery device for sea spill according to any one of claims 1 - 5, **characterized in that** the method comprises:
a recovery device installation step of installing a recovery device which is detachably coupled to a control vessel (20) or an amphibious control vehicle to recover oil;
an oil recovery step of collecting and recovering marine or harbor oil with an oil recovery assembly (120) provided in the recovery device after the recovery device installation step;
a recovery oil transfer step of transferring the recovered oil to the control vessel or the amphibious control vehicle using the central conveyor (130) provided in the recovery device after the oil recovery step; and
a selective separation step of selectively separating water from the transferred oil using a recovery oil treatment assembly mounted on each of the control vessel and the amphibious control vehicle after the recovery oil transfer step.

## Patentansprüche

1. Vorrichtung zur Rückgewinnung von hochviskosem Öl bei Meeresverschmutzung zum Entfernen und Rückgewinnen von auf dem Meer oder in einem Hafen ausgetretenem hochviskosem Öl, wobei die Vorrichtung Folgendes umfasst:
einen Vorrichtungskörper (10), der dazu ausgelegt ist, auf dem Meer oder in einem Hafen ausgetretenes hochviskoses Öl zurückzugewinnen;
einen Hauptkörper (110), der in einem Teil des Vorrichtungskörpers vorgesehen ist und einen zu einer Seite hin geöffneten Öffnungsteil aufweist;
eine Ölrückgewinnungsanordnung (120), die in einem Teil des Vorrichtungskörpers vorgesehen und dazu ausgelegt ist, Öl aufzunehmen und zurückzugewinnen; und
einen mittigen Förderer (130), der in einem Teil des Vorrichtungskörpers vorgesehen und mit der Ölrückgewinnungsanordnung verbunden ist, um von der Ölrückgewinnungsanordnung zurückgewonnenes Öl zu transportieren;
wobei die Ölrückgewinnungsanordnung (120) Folgendes umfasst:
ein Paar Raupenförderer (122), die mit einer Seite auf jeweils entgegengesetzten Seiten eines Öffnungsteils des Hauptkörpers angeordnet sind und sich mit der anderen Seite voneinander weg erstrecken, wobei die Raupenförderer (122) dazu ausgelegt sind, sich in Richtung des Öffnungsteils zu drehen;
Drehschaufelskimmer (124), die dazu vorgesehen sind, in einem festgelegten Intervall auf den Außenflächen der Raupenförderer voneinander beabstandet zu sein, um Öl und Fremdstoffe aufzunehmen;
**dadurch gekennzeichnet, dass** die Ölrückgewinnungsanordnung (120) ferner Folgendes umfasst:
ein Paar Schabeskimmer (126), die jeweils mit einem Ende mit entgegengesetzten Seiten des Öffnungsteils des Hauptkörpers verbunden sind; wobei jeder Schabeskimmer Folgendes umfasst:
eine Stütze (127), die dazu ausgebildet ist, sich zur Vorderseite eines Steuerfahrzeugs oder eines Amphibiensteuerfahrzeugs zu erstrecken;
einen Schwenkarm (128), der an einem Ende mit dem anderen Ende der jeweiligen Stütze gelenkig verbunden ist und wobei dessen anderes Ende dazu ausgelegt ist, zur Vorderseite oder zur Seite des Steuerfahrzeugs oder Amphibiensteuerfahrzeugs ausdehnbar zu sein;
einen Stopper (129), der dazu ausgebildet ist, von dem anderen Ende des jeweiligen Schwenkarms in jeweils entgegengesetzte Richtungen vorzustehen und in einem verstellbaren Winkel mit dem anderen Ende des jeweiligen Schwenkarms koppelbar ist; und
ein Verriegelungselement, das zwischen dem jeweiligen Schwenkarm und dem Hauptkörper vorgesehen ist und eine mehrstufige Form mit einer Teleskopstruktur aufweist;
wobei jeder Schwenkarm (128) in einem mehrstufigen Teleskopverfahren hergestellt ist und auf eine festgelegte Länge einstellbar ist,
wobei die Ölrückgewinnungsanordnung (120) ferner Folgendes umfasst:
eine Schwenkarmstütze (80), die mit dem Ende eines der Schwenkarme gekoppelt ist, der auf die festgelegte Länge ausgefahren ist, und dazu geeignet ist, mit dem Steuerfahrzeug verbunden zu werden, um den längs ausgefahrenen Schwenkarm zu stützen.

2. Vorrichtung nach Anspruch 1, **dadurch gekennzeichnet, dass** der Vorrichtungskörper (100) lösbar mit einer Vorderseite oder Seite eines Steuerfahrzeugs (20) gekoppelt ist.

3. Vorrichtung nach Anspruch 2, **dadurch gekennzeichnet, dass** der Vorrichtungskörper (100) lösbar mit einem Teil eines Amphibiensteuerfahrzeugs gekoppelt ist.

4. Vorrichtung nach Anspruch 3, **dadurch gekennzeichnet, dass** die Vorrichtung ferner Folgendes umfasst:
eine Rückgewinnungsölbehandlungsanordnung, die jeweils mit dem Steuerfahrzeug und dem Amphibiensteuerfahrzeug lösbar gekoppelt ist, wobei von der Ölrückgewinnungsanordnung zurückgewonnenes Öl selektiv darin aufgenommen oder zu einem externen Öllagertank transportiert wird.

5. Vorrichtung nach Anspruch 4, **dadurch gekennzeichnet, dass** die Vorrichtung ferner Folgendes umfasst:
ein Wärmeübertragungselement (16), das an einem Teil des Steuerfahrzeugs oder des Amphibiensteuerfahrzeugs montiert ist, um eine Wärmequelle für die Rückgewinnungsölbehandlungsanordnung vorzusehen.

6. Verfahren zur Rückgewinnung von hochviskosem Öl bei Meeresverschmutzung unter Verwendung der Vorrichtung zur Rückgewinnung von hochviskosem Öl bei Meeresverschmutzung nach einem der Ansprüche 1-5, **dadurch gekennzeichnet, dass** das Verfahren Folgendes umfasst:
einen Rückgewinnungsvorrichtungseinbauschritt zum Einbauen einer Rückgewinnungsvorrichtung, die lösbar mit einem Steuerfahrzeug (20) oder einem Amphibiensteuerfahrzeug gekoppelt ist, um Öl zurückzugewinnen;
einen Ölrückgewinnungsschritt zum Aufnehmen und Rückgewinnen von Öl aus dem Meer oder Hafen mit einer in der Rückgewinnungsvorrichtung vorgesehenen Ölrückgewinnungsanordnung (120) nach dem Rückgewinnungsvorrichtungseinbauschritt;
einen Rückgewinnungsöltransportschritt zum Transport des zurückgewonnenen Öls zum Steuerfahrzeug oder Amphibiensteuerfahrzeug unter Verwendung des in der Rückgewinnungsvorrichtung vorgesehenen mittigen Förderers (130) nach dem Ölrückgewinnungsschritt und
einen selektiven Trennungsschritt zum selektiven Trennen von Wasser von dem transportierten Öl unter Verwendung einer Rückgewinnungsölbehandlungsanordnung, die jeweils am Steuerfahrzeug und dem Amphibiensteuerfahrzeug montiert ist, nach dem Rückgewinnungsöltransportschritt.

## Revendications

1. Dispositif de récupération d'hydrocarbures à haute viscosité pour les marées noires pour enlever et récupérer les hydrocarbures à haute viscosité déversés en mer ou dans un port, le dispositif comprenant :
un corps de dispositif (10) conçu pour récupérer les hydrocarbures à haute viscosité déversés en mer ou dans un port ;
un corps principal (110) fourni dans une partie du corps de dispositif et ayant une partie ouverture ouverte vers un côté ;
un ensemble de récupération d'hydrocarbures (120) situé dans une partie du corps de dispositif et conçu pour collecter et récupérer les hydrocarbures ; et
un transporteur central (130) situé dans une partie du corps de dispositif et relié à l'ensemble de récupération d'hydrocarbures pour transférer les hydrocarbures récupérés de l'ensemble de récupération d'hydrocarbures ;
l'ensemble de récupération d'hydrocarbures (120) comprenant :
une paire de transporteurs à chenilles (122) dont des côtés sont situés sur des côtés opposés d'une partie ouverture du corps principal, respectivement, et dont les autres côtés s'étendent dans des directions à l'opposé l'une de l'autre, les transporteurs à chenilles (122) étant conçus pour tourner dans une direction de la partie ouverture ;
des écumeurs à godets rotatifs (124) fournis pour être espacés les uns des autres à un intervalle prédéfini sur les surfaces extérieures des transporteurs à chenilles pour collecter les hydrocarbures et les substances étrangères ; **caractérisé en ce que** l'ensemble de récupération d'hydrocarbures (120) comprend en outre :
une paire d'écumeurs racleurs (126), chacun ayant une extrémité reliée à des côtés opposés de la partie ouverture du corps principal ; chaque écumeur racleur comprenant :
un support (127) qui est formé pour s'étendre en longueur vers l'avant d'un navire de commande ou d'un véhicule de commande amphibie ;
un bras de balayage (128) dont l'une des extrémités est articulée à l'autre extrémité du support respectif et dont l'autre extrémité est conçue pour pouvoir être étirée vers l'avant ou le côté du navire de commande ou du véhicule de commande amphibie ;
une butée (129) formée pour faire saillie de l'autre extrémité du bras de balayage respectif dans des directions opposées respectivement et accouplée à l'autre extrémité du bras de balayage respectif d'une manière réglable en angle ; et
un élément de verrouillage placé entre le bras de balayage respectif et le corps principal et ayant une forme à plusieurs étages avec une structure télescopique ;
chaque bras de balayage (128) étant fabriqué selon un procédé télescopique à plusieurs étages et pouvant être ajusté à une longueur prédéfinie,
l'ensemble de récupération d'hydrocarbures (120) comprenant en outre :
un support de bras de balayage (80) accouplé à l'extrémité de l'un des bras de balayage étendu à la longueur prédéfinie et pouvant être relié au navire de commande pour soutenir le bras de balayage étiré en longueur.

2. Dispositif selon la revendication 1, **caractérisé en ce que** le corps de dispositif (100) est accouplé de manière amovible à l'avant ou au côté d'un navire de commande (20).

3. Dispositif selon la revendication 2, **caractérisé en ce que** le corps de dispositif (100) est accouplé de manière amovible à une partie d'un véhicule de commande amphibie.

4. Dispositif selon la revendication 3, **caractérisé en ce que** le dispositif comprend en outre :
un ensemble de traitement des hydrocarbures récupérés accouplé de manière amovible à chacun du navire de commande et du véhicule de commande amphibie, les hydrocarbures récupérés par l'ensemble de récupération d'hydrocarbures étant sélectivement logés en son sein ou transférés vers un réservoir de stockage d'hydrocarbures externe.

5. Dispositif selon la revendication 4, **caractérisé en ce que** le dispositif comprend en outre :
un élément de transfert de chaleur (16) monté sur une partie du navire de commande ou du véhicule de commande amphibie pour fournir une source de chaleur à l'ensemble de traitement des hydrocarbures récupérés.

6. Procédé de récupération d'hydrocarbures à haute viscosité pour les marées noires à l'aide du dispositif de récupération d'hydrocarbures à haute viscosité pour les marées noires selon l'une quelconque des revendications 1 à 5, **caractérisé en ce que** le procédé comprend :
une étape d'installation de dispositif de récupération consistant à installer un dispositif de récupération qui est accouplé de manière amovible à un navire de commande (20) ou à un véhicule de commande amphibie pour récupérer les hydrocarbures ;
une étape de récupération d'hydrocarbures consistant à collecter et à récupérer les hydrocarbures en mer ou dans un port à l'aide d'un ensemble de récupération d'hydrocarbures (120) situé dans le dispositif de récupération après l'étape d'installation de dispositif de récupération ;
une étape de transfert d'hydrocarbures récupérés consistant à transférer les hydrocarbures récupérés vers le navire de commande ou le véhicule de commande amphibie à l'aide du transporteur central (130) situé dans le dispositif de récupération après l'étape de récupération d'hydrocarbures ; et
une étape de séparation sélective consistant à séparer sélectivement l'eau des hydrocarbures transférés à l'aide d'un ensemble de traitement des hydrocarbures récupérés monté sur chacun du navire de commande et du véhicule de commande amphibie après l'étape de transfert des hydrocarbures récupérés.
